# EUROPEAN PATENT APPLICATION

(11) **EP 4 621 464 A1**
(43) Date of publication of application: **24.09.2025**
(21) Application number: 25165207.9
(22) Date of filing: 21.03.2025
(51) Int. Cl.: G02B 6/44

(54) **OPTICAL FIBRE CABLE WITH IMPROVED PNEUMATIC FEEDING**

(30) Priority: 22.03.2024 IN 202411022117
(71) Applicant: HFCL Limited, New Delhi 110048 (IN)
(72) Inventor: GARG, Akhil, Telangana (IN); DAS, Jyoti Prakash, Telangana (IN); K, Kaarthick, Telangana (IN); GUPTA, Mohit, Telangana (IN)
(74) Representative: Office Freylinger

(57) **Abstract**

The present invention provides an optical fiber cable (100) comprising one or more optical fibers (102) enclosed within an outer sheath (104) of the optical fiber cable (100). The outer sheath (104) surface has an average roughness (Ra) in the range of 1 to 4 µm, and a maximum height of roughness (Rz) in the range of 6 to 15 µm, wherein the outer sheath material comprises high density polyethylene (HDPE). The outer sheath (104) material has a low coefficient of dynamic friction. At a distance of about 1850 m, the optical fiber cable (100) has a blowing speed greater than about 70 m/min.

## Description

### TECHNICAL FIELD

The present invention relates generally to optical fiber cables. In particular, the present invention relates to an outer sheath of an optical fiber cable.

### BACKGROUND OF THE INVENTION

This section is intended to provide information relating to the field of disclosure and thus, any approach or functionality described herein should not be assumed to qualify as prior art merely by its inclusion in this section.

Optical fiber cables are generally installed in ducts using pneumatic feeding systems, particularly when manual feeding of the optical fiber cable is challenging and/or time-consuming. Conventional optical fiber cables have outer sheath with materials that do not have the friction properties or the strength characteristics to facilitate effective feeding of the optical fiber cable into the cable duct without causing damage. Some of the problems encountered include, buckling of the optical fiber cable, blocking by the optical fiber cable, and/or damage to the optical fiber cable.

Conventional optical fiber cables are also prone to tangling or coiling within the cable ducts, blockage, or entanglement of the optical fiber cable within the duct. Further, friction between the optical fiber cable outer sheath and walls of the duct causes slow and hindered movement of the optical fiber cable within the duct, leading to increase time for installation. Further, in order to overcome the friction, additional lubrication may be required, leading to use of additional resources. Furthermore, the lack of required strength of the optical fiber cable outer sheath may lead to damage of the optical fibres that may be caused due to the coiling or entanglement of the optical fiber cable within the duct.

There is, therefore, a requirement in the art for an optical fiber cable that has the required properties to overcome at least some of the above-mentioned limitations of conventional optical fiber cables.

### SUMMARY OF THE INVENTION

This section is intended to introduce one or more aspects and/or embodiments of the present disclosure in a simplified form and is not intended to identify any key advantages or features of the present disclosure.

In an aspect of the present invention, there is provided an optical fiber cable comprising one or more optical fibers enclosed within an outer sheath of the optical fiber cable, characterized in that the outer sheath surface has an average roughness in the range of 1 to 4 µm, wherein the outer sheath material comprises high density polyethylene (HDPE).

In an aspect of the present invention, the outer sheath material comprises a blend of a base resin comprising HDPE, and a silicone masterbatch in the range of 1 to 5 wt.%.

In an aspect of the present invention, the silicon masterbatch comprises 30 to 50 wt.% ultra-high molecular weight silicone polymer dispersed in a polymeric resin, and wherein the polymeric resin is selected from the group consisting of polyethylene, polypropylene, polyamide, and combinations thereof.

In an aspect of the present invention, the base resin comprises one or more of polyamide, polypropylene, polyvinyl chloride, polyurethane, or polyethylene.

In an aspect of the present invention, the optical fiber cable comprises at least a strength member embedded in the outer sheath.

In an aspect of the present invention, the optical fiber cable comprises one or more modules, wherein the modules enclose one or more optical fibres.

In an aspect of the present invention, the module material is selected from the group consisting of polyamide, polyethylene, polyvinyl chloride, polyurethane, polypropylene, polyolefin, and combinations thereof.

In an aspect of the present invention, the optical fiber cable comprises at least a secondary strength member located within the outer sheath of the optical fiber cable.

In an aspect of the present invention, the optical fiber cable comprises at least a first layer, wherein at least the first layer is selected from the group consisting of hydrophobic layer, armoured layer, dielectric layer, and combinations thereof.

In an aspect of the present invention, the one or more optical fibres is selected from the group consisting of loose fibres, stranded fibers, flat ribbons, rollable ribbons, intermittently bonded ribbons, and combinations thereof.

In an aspect of the present invention, the outer sheath surface has a root mean square roughness (Rq) in the range of 0.5 to 4 µm.

In an aspect of the present invention, the outer sheath surface has a maximum height of roughness (Rz) in the range of 6 to 15 µm.

### BRIEF DESCRIPTION OF THE ACCOMPANYING DRAWINGS

The present disclosure, both as to its organization and manner of operation, together with further objects and advantages, may best be understood by reference to the description, taken in connection with the accompanying drawings. These and other details of the present invention will be described in connection with the accompanying drawings, which are furnished only by way of illustration and not in limitation of the scope of the present disclosure.
FIG. 1A illustrates a schematic sectional view of an optical fiber cable, according to an embodiment of the present invention;
FIG. 1B illustrates a schematic sectional view of the optical fiber cable, according to another embodiment of the present invention; and
FIGs. 2A and 2B illustrates blow-installation performance of the optical fiber cable, according to embodiments of the present invention.

### DETAILED DESCRIPTION OF THE INVENTION

In the following description, for the purposes of explanation, various specific details are set forth in order to provide a thorough understanding of one or more embodiments of the present disclosure. It will be apparent, however, that embodiments of the present disclosure may be practiced without these specific details. Several features described hereafter may each be used independently of one another or in any combination with other features. An individual feature may not address any of the problems discussed above or may address only some of the problems discussed above. Some of the problems discussed above may not be fully addressed by any of the features described herein. Example embodiments of the present disclosure are described below, as illustrated in various drawings, in which same reference numerals refer to the same parts throughout the different drawings.

As used herein, the term "average roughness (Ra)" refers to an arithmetic average of absolute values of deviations in the outer sheath surface profile height (peaks and valleys) measured from a mean line, and over a sampling length. The average roughness (Ra) may represent a global evaluation of a roughness of the outer sheath surface over the sampling length. The average roughness (Ra) is measured in µm. The average roughness (Ra) may be measured according to Japanese Industrial Standard (JIS) B0601 (2013).

As used herein, the term "root mean square roughness (Rq)" refers to a square root of the arithmetic average of the squared values of deviations in the outer sheath surface profile height (peaks and valleys) measured from a mean line, and over a sampling length, and provides the standard deviation(s) in the surface profile height deviations over the sampling length. The root mean square roughness (Rq) is measured in µm. The root means square roughness (Rq) may be measured according to JIS B0601 (2013).

As used herein, the term "maximum height of roughness (Rz)" refers to a sum of highest profile peak height and the lowest profile valley depth in the outer sheath surface measured from a mean line, and over a sampling length. The maximum height of roughness (Rz) is measured in µm. The maximum height of roughness (Rz) may be measured according to JIS B0601 (2013).

As used herein, the term "coefficient of dynamic friction" refers to a combination of frictional forces experienced by the outer sheath surface against an inner wall of a duct during relative motion between said outer sheath surface and the inner wall of the duct. The coefficient of dynamic friction is a dimensionless quantity.

The present invention provides an optical fiber cable comprising one or more optical fibers enclosed within an outer sheath of the optical fiber cable. The outer sheath of the optical fiber cable is characterized by having an average roughness in the range of 1 to 4 µm, and the outer sheath material comprises high density polyethylene (HDPE). In a preferred embodiment, the outer sheath material comprises a blend of a base resin comprising high density polyethylene (HDPE), and a silicone masterbatch in the range of 1 to 5 wt.%.

The outer sheath is the outermost layer of the optical fiber cable. The outer sheath is adapted to provide protection to the enclosed one or more optical fibres from environmental conditions. The outer sheath further provides structural rigidity to the optical fiber cable. In order to provide structural rigidity, while also allowing the optical fiber cable to be flexible, the outer sheath can have structural elements enabling a combination of strength, rigidity and flexibility. In an embodiment, the outer sheath comprises one or more layers. In various embodiments, the one or more layers are made of similar materials or different materials.

In an embodiment, the outer sheath material has a low coefficient of dynamic friction. In a preferred embodiment, the blend comprises the silicone masterbatch in the range of 2 to 4 wt.%. In an embodiment, the silicone masterbatch comprises 30 to 50 wt.% ultra-high molecular weight silicone polymer dispersed in a polymeric resin. In an embodiment, the polymeric resin is selected from the group consisting of polyethylene (PE), polypropylene (PP), and polyamide (PA). In an embodiment, the base resin further comprises one or more of PA, PP, PVC (polyvinyl chloride), PU (polyurethane), or PE. In an embodiment, the outer sheath material further comprises fillers and additives based on required application, such as, without limitations, additives for colour, UV protection, water resistance etc.

In an embodiment, the outer sheath thickness is in the range of 0.3 to 0.7 mm. In a preferred embodiment, the outer sheath thickness is 0.5 ± 0.1 mm. In a preferred embodiment, the outer sheath surface has the average roughness in the range of 1 to 4 µm. Further, in an embodiment, the outer sheath surface has a maximum height of roughness in the range of 6 to 15 µm, and a root mean square roughness in the range of 0.5 to 4 µm.

The material is such that the dynamic friction between the outer sheath surface and the duct wall is reduced. In an exemplary application, the dynamic friction between the outer sheath surface and the duct wall is reduced when the optical fiber cable is being blow-installed in the duct. The low dynamic friction allows for the optical fiber cable to be blown through longer distances relative to conventional cables. The low dynamic friction further allows for the optical fiber cable to be blown through a specific distance in a shorter time duration relative to conventional cables. Furthermore, due to the reduced dynamic friction, the potential for damage of outer sheath is reduced.

In an embodiment, each optical fiber comprises a light transmitting core surrounded by a cladding. The refractive index of the cladding is different from that of the light transmitting core, and the cladding serves to restrict the transmitted light signals to within the light transmitting core. The light transmitting core is typically made of an optically transmitting material, such as, without limitations, glass, silica, quartz, plastic, ceramic, or any combination thereof. In some implementations, the light transmitting core and the surrounding cladding are further coated with one or more primary layers made of polymeric, organic, and/or inorganic materials in order to provide mechanical and environmental protection to the central light transmitting core. In other implementations, one or more secondary layers may be provided surrounding the one or more primary layers for providing mechanical support to the central light transmitting core. In an embodiment, the one or more primary and/or secondary layers is coloured. The one or more primary and/or secondary layers surrounding the central light transmitting core and the cladding may not affect the capacity of the optical fiber to transmit light signals. In an embodiment, the plurality of optical fibers comprises single-core fibers, multi-core fibers, or a combination thereof. In an embodiment, the plurality of optical fibers are single-mode optical fibers. In another embodiment, the plurality of optical fibers are multimode optical fibers. In an embodiment, the plurality of optical fibers is compliant with ITU-T standards. In a preferred embodiment, the optical fiber is G.657A1 complaint. It is understood by a person skilled in the art that the cross-sectional dimension(s) of the optical fibers described herein are not a limiting feature of the present invention, and are generally known in the art. In an example, the cladding diameter of the optical fiber is 125 ± 0.7 µm, and the outer diameter of the optical fiber is in the range of 250-500 µm. In another example, the outer diameter of the optical fiber is less than 250 µm (such as 210 µm). In another example, the outer diameter of the optical fiber is 160 to 210 µm.

In an embodiment, the optical fiber cable comprises at least 6, at least 12, at least 24, at least 36, at least 48, at least 96, or at least 144 optical fibers. In other embodiments, the number of optical fibers in the optical fiber cable is different, based on application requirements.

In an embodiment, the one or more optical fibers is selected from the group consisting of loose fibers, stranded fibers, flat ribbons, rollable ribbons, intermittently bonder ribbons (IBRs), and combinations thereof. In a preferred embodiment, the one or more optical fibers are IBRs. In an embodiment, the optical fiber cable comprises one or more IBRs. In an embodiment, the number of optical fibers is the one or more IBRs is the same. In another embodiment, the number of optical fibers in at least an IBR is different.

It will be appreciated by a person skilled in the art that the optical fibers of the present invention are illustrative, and not a limiting or an essential feature of the present invention. The person skilled in the art will also appreciate that the features of the disclosed optical fibers are not limiting to the scope of the present invention, and that the present invention may encompass other optical fibers known in the art, as required by different application attributes for the optical fiber cable.

In an embodiment, the optical fiber cable comprises one or more modules (or, tubes). In an embodiment, at least some of the one or more modules are loose modules. The one or more modules enclose the one or more optical fibers. In an embodiment, the number of optical fibers in each module of the one or more modules is the same. In another embodiment, the number of optical fibers in at least a module of the one or more modules is different. In an embodiment, the one or more optical fibers are placed directly within the module, without bundling. In another embodiment, the one or more optical fibers enclosed within the module are grouped into one or more bundles. In an embodiment, the optical fiber cable comprises a single module enclosing all the optical fibres of the optical fiber cable.

In a preferred embodiment, the optical fiber cable comprises 144 optical fibers. In a preferred embodiment, the optical fiber cable comprises 12 loose modules, with each of the loose module comprising 12 single mode optical fibers.

In an embodiment, the module material is selected from the group consisting of PA, PE, PVC, PU, PP, polyolefin, and combinations thereof. In an embodiment, the module material comprises thermoplastic elastomers (TPEs). A non-limiting example of TPE is Hytrel^{®} HTR8351. In an embodiment, the module material comprises a low-smoke zero-halogen (LSZH) resin. A non-limiting example of LSZH resin is ECCOH^{™} 6151. In an embodiment, the one or more modules have a cross-sectional geometry that is circular, polygonal, or a combination thereof. In an embodiment, the one or more modules has wall thickness in the range of 0.05 mm to 0.3 mm. In a preferred embodiment, the one or more modules have an inner diameter of 1.1 ± 0.05 mm, an outer diameter of 1.4 ± 0.05 mm, and a wall thickness of 0.15 mm.

In an embodiment, the optical fiber cable further comprises a plurality of yarn members surrounding the optical fibers The plurality of yarn members is tightly packed round the one or more optical fibers, providing mechanical support to the one or more optical fibers. In a preferred embodiment the plurality of yarn member is aramid yarn, ARP, or a combination thereof. In an embodiment, at least a yarn member of the plurality of yarn members is coloured.

In an embodiment, the optical fiber cable comprises at least a strength member embedded in the outer sheath. In an embodiment, the optical fiber cable comprises a plurality of strength members embedded in the outer sheath. In such an embodiment, the strength members are located equidistant, or are located at unequal distances relative to each other. In some embodiment, the plurality of strength members is grouped into one or more groups of strength members. The one or more groups of strength members are located equidistant, or are located at unequal distances relative to each other.

In an embodiment, the optical fiber cable comprises at least a secondary strength member located within the outer sheath of the optical fiber cable. At least the secondary strength member is located among the plurality of yarn members.

In an embodiment, the strength members (those embedded in the outer sheath and/or the secondary strength member) are made of at least one of fibreglass-reinforced plastic (FRP), aramid reinforced plastic (ARP), aramid yarn, polymer, or steel. In a preferred embodiment, the strength members are ARP rods embedded in the outer sheath. In an embodiment, the strength members comprise one or more coatings. In a preferred embodiment, the coating is ethylene acrylic acid (EAA). In an embodiment, the diameter of the strength member is in the range of 0.40 to 0.6 mm. In a preferred embodiment, the diameter of the strength member is 0.4 ± 0.05 mm.

In an embodiment, the optical fiber cable comprises at least a first layer. A least the first layer is located between the one or more optical fibers and the outer sheath. In an embodiment, at least the first layer is selected from the group consisting of hydrophobic layer, armoured layer, dielectric layer, and combinations thereof.

In an embodiment, at least the first layer is a hydrophobic layer. The water-blocking layer comprises water-blocking elements selected from the group consisting of water-swellable tape, water-swellable yarn, water-blocking fibers, water-blocking powders, water-blocking gel, and combinations thereof.

In an embodiment, at least the first layer is a dielectric layer, comprising insulating materials selected from the group consisting of FRP, ARP, IGFR, aramid yarn, polyvinylidene fluoride (PVDF), polyether-ether ketone (PEEK), polyvinyl chloride (PVC), flame-retardant polyethylene (FRPE), chlorinated polyvinyl chloride (CPVC), polytetrafluoroethylene (PTFE), Fiber-Reinforced Polymer (FRP), acrylonitrile butadiene styrene (ABS), low-smoke zero-halogen (LSZH) material, polybutylene terephthalate (PBT), polycarbonate (PC), polyethylene (PE), polypropylene (PP), polyethylene terephthalate (PET), and combinations thereof.

In an embodiment, at least the first layer is an armour layer. The armour layer can be made of metal or polyethylene. In an embodiment, the material of the armour layer can include aluminium, stainless steel, or Kevlar.

In an embodiment, the optical cable has an outer diameter in the range of 7.5 to 8.5 mm. In a preferred embodiment, the optical cable has the outer diameter of 7.9 ± 0.3 mm. In an embodiment, the optical fiber cable has a weight in the range of 40 to 70 kg/km. In a preferred embodiment, the optical fiber cable has a weight of 55 ± 10 kg/km.

It will be appreciated by persons skilled in the art that the optical fiber cable can comprise additional layers and components that are not disclosed herein, but are however known in the art; such features are well within the gamut of disclosure of the present invention, but do not form an essential or limiting feature of the present invention.

The present invention further provides a method for manufacturing the optical fiber cable as substantially described herein. The method comprises arranging and aligning one or more optical fibres in a predefined configuration. The method further comprises applying a binding agent on the arrangement of the plurality of optical fibres to bond the optical fibres. The bonded plurality of optical fibres is encapsulated in the outer sheath member. Further, the method also comprises embedding one or more strength members in the outer sheath. In an embodiment, at least the strength members, and the optical fibers and the outer sheath are coextruded through an extrusion die.

Exemplary examples of the optical fiber cable of the present invention are described below, as illustrated in various drawings, in which the same reference numerals refer to the same parts throughout the different drawings.

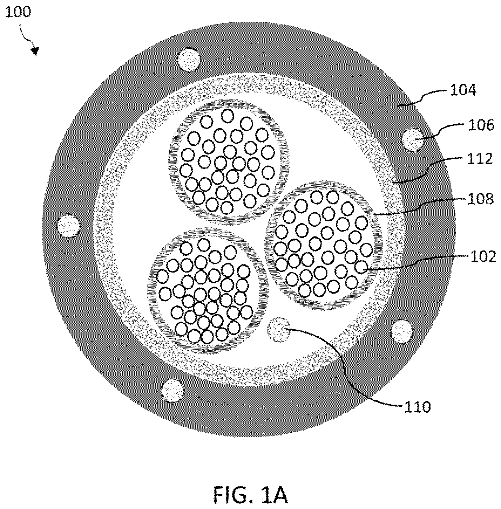

Referring to FIG. 1A, the optical fiber cable 100 comprises a one or more optical fibers 102 enclosed within an outer sheath 104 of the optical fiber cable 100. The plurality of optical fibres 102 is distributed between and enclosed by a plurality of modules 108. The modules 104 have a circular cross-section. The optical fiber comprises five strength members 106 embedded in the outer sheath 104. The strength members 106 are located equidistant relative to each other. The optical fiber cable 100 further comprises a secondary strength member 110 located within the optical fiber cable 100. The optical fiber cable 100 further comprises a first layer 112 surrounding the modules 108. The first layer 112 is selected from the group consisting of hydrophobic layer, armoured layer, dielectric layer, and combinations thereof.

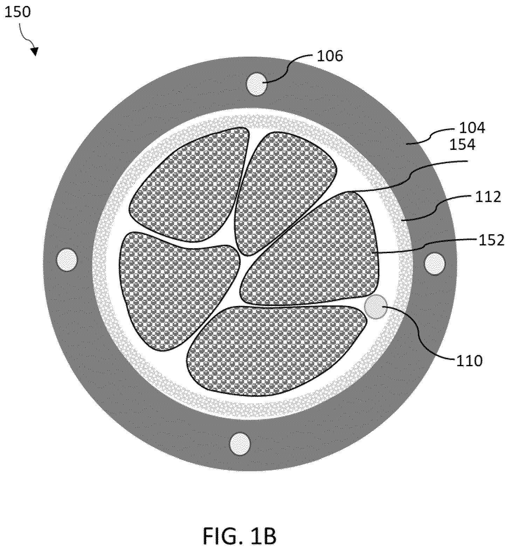

Referring to FIG. 1B, an optical fiber cable 150 is shown. The optical fiber cable 150 is substantially similar to the optical fiber cable 100 of FIG. 1A. Common components between the optical fiber cable 150, and the optical fiber cable 100 of FIG. 1A are referred to using the same reference numerals. The optical fiber cable 150 comprises a plurality of optical fibres 152. The plurality of optical fibres 152 are bundled into a plurality of Intermittently Bonded Ribbon (IBR) bundles 154. The IBR bundles 154 are not restricted by a shape and can conform to the area available within the optical fiber cable. The IBR bundles 154 are bundled by at least a bundling member, which can be a yarn or a plurality of yarns.

Referring to FIGs. 1A and 1B, the outer sheath 104 material comprises HDPE. In particular, the outer sheath material comprises a blend of HDPE and a silicone masterbatch, wherein the silicone masterbatch is in the range of 2 to 4 wt.%. However, other base materials other than HDPE, and suitable alternatives to silicone may also be contemplated to achieve the objective. The outer sheath 104 has a low coefficient of dynamic friction and further, has a low surface roughness. Specifically, the outer sheath 104 surface has an average roughness (Ra) in the range of 1 to 4 µm; a root mean square roughness (Rq) in the range of 0.5 µm to 4 µm; and a maximum height of roughness (Rz) in the range of 6 µm to 15 µm.

The low coefficient of dynamic friction of the outer sheath 104 allows for reduced friction between the outer sheath 104 surface and a duct wall when the optical fiber cable 100 is being blow-installed in a duct. The low dynamic friction of the outer sheath 104 surface allows for the optical fiber cable 100 to be blown to longer distances and/or blown a specific distance in lesser time relative to conventional optical fiber cables. Further, the outer sheath 104 with lower roughness results in lower damage to the optical fiber cable 100.

### EXAMPLES

Two optical fiber cable samples, denominated as Sample 1 and Sample 2 were prepared to determine and demonstrate the blowing performance of the optical fiber cables, whereby Sample 1 corresponds to an optical fiber cable with conventional outer sheath material, while Sample 2 corresponds to an optical fiber cable with outer sheath material as per the present invention. The optical fiber cables of Sample 1 and Sample 2 are comparable except for the outer sheath material. To assess the blow-installation performance, Samples 1 and 2 were blow-installed in a duct having an inner diameter of 12 mm, using an air pressure of 12 bar. An INTELLIJET-P02 blowing machine was used for all the blowing trials along with a Kesear Ask 28 compressor. Further, a Micro Jetting lube was used, to reduce the coefficient of the friction between the outer sheath surface of the optical fiber cables and the duct wall.

In Sample 1, the outer sheath material is HDPE (Borealis Borstar^{®} HE6062), while in Sample 2, the outer sheath material comprises the blend of HDPE and silicone masterbatch, where silicone masterbatch concentration in the range of 1 to 5wt.%. The optical fiber cables comprise 12 loose modules each, each loose module comprising 12 single mode optical fibers. The thickness of the outer sheath is about 0.5 ± 0.1 mm, while the diameter of the optical fiber cable is about 7.9 ± 0.3 mm. The weight of the cables is about 55 ± 10 kg/km. Particularly, for the Sample 2, the average surface roughness (Ra) of the outer sheath material was in the range of 1 to 4 µm; a root mean square roughness (Rq) was in the range of 0.5 to 4 µm; and a maximum height of roughness (Rz) was in the range of 6 to 15 µm.

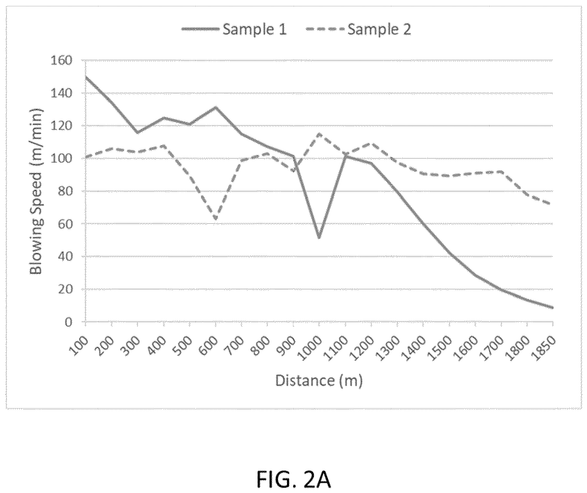

As seen from FIG. 2A, while the blowing speed of the optical fiber cable of Sample 1 as compared to Sample 2 is higher when blowing distance is less than about 900 m, however, at distances greater than about 1000 m, the blowing speed of the optical fiber cable of Sample 2 does not significantly drop off. In contrast, the optical fiber cable of Sample 1 shows a steep drop off in blowing speed, particularly after about 1100 m. It can also be seen that while the blowing speed of the optical fiber cable of Sample 1 at distances of about 1850 m falls to less than 10 m/min, in contrast, the blowing speed of the optical fiber cable of Sample 2 is higher than about 70 m/min, which is significantly higher relative to that of the optical fiber cable of Sample 1.

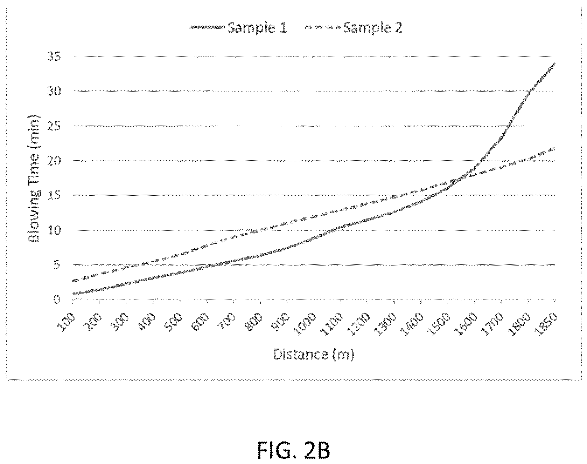

As seen in FIG. 2B, the optical fiber cable of Sample 1, particularly after about 1500 m, shows an exponential rise in blowing time for every 100 m of distance blown, while, in contrast, the optical fiber cable of Sample 2, even after 1500 m, shows only a linear rise in blowing time for every 100 m of distance blown. Further, at a blowing distance of about 1850 m, the blowing time of the optical fiber cable of Sample 2 is significantly less than that of the optical fiber cable of Sample 1 (about 22 mins/50m compared to about 35 mins/50m, respectively).

The above data clearly shows that the optical fiber cable 100 of the present invention comprising the novel outer sheath 104 exhibits improved blowing performance, particularly for distances greater than about 900 m, compared with optical fiber cables with conventional outer sheath.

It may be appreciated that various changes, adaptations, and modifications may be made therein without departing from the spirit of the disclosure and the scope of the appended claims. It will be obvious to a person skilled in the art that the present disclosure may be embodied in other specific forms without departing from its spirit or essential characteristics. The described embodiments may be considered in all respects only as illustrative and not restrictive.

### LIST OF REFERENCE NUMERALS

- 100: Optical Fiber Cable
- 102: Optical Fibres
- 104: Outer Sheath
- 106: Strength Member
- 108: Module
- 110: Secondary Strength Member
- 112: First Layer
- 150: Optical Fiber Cable
- 152: Optical Fibres
- 154: IBR bundle

## Claims

1. An optical fiber cable (100) comprising:
- one or more optical fibers (102) enclosed within an outer sheath (104) of the optical fiber cable (100), ***characterized in that*** the outer sheath (104) surface has an average roughness (Ra) in the range of 1 to 4 µm, wherein the outer sheath (104) material comprises high density polyethylene (HDPE).

2. The optical fiber cable (100) as claimed in claim 1, wherein the outer sheath (104) material comprises a blend of a base resin comprising HDPE, and a silicone masterbatch in the range of 1 to 5 wt.%.

3. The optical fiber cable (100) as claimed in claim 2, wherein the silicon masterbatch comprises 30 to 50 wt.% ultra-high molecular weight silicone polymers dispersed in a polymeric resin, and wherein the polymeric resin is selected from the group consisting of polyethylene, polypropylene, polyamide, and combinations thereof.

4. The optical fiber cable (100) as claimed in claim 2, wherein the base resin further comprises one or more of polyamide, polypropylene, polyvinyl chloride, polyurethane, and polyethylene.

5. The optical fiber cable (100) as claimed in claim 1, comprising at least a strength member (106) embedded in the outer sheath (104).

6. The optical fiber cable (100) as claimed in claim 1, comprising one or more modules (108), wherein the modules enclose one or more optical fibers (104).

7. The optical fiber cable (100) as claimed in claim 6, wherein the module (108) material is selected from the group consisting of polyamide, polyethylene, polyvinyl chloride, polyurethane, polypropylene, polyolefin, and combinations thereof.

8. The optical fiber cable (100) as claimed in claim 1, comprising at least a secondary strength member (110) located within the outer sheath (104) of the optical fiber cable (100).

9. The optical fiber cable (100) as claimed in claim 1, comprising at least a first layer (112), wherein at least the first layer (112) is selected from the group consisting of hydrophobic layer, armoured layer, dielectric layer, and combinations thereof.

10. The optical fiber cable (100) as claimed in claim 1, wherein the one or more optical fibers (102) is selected from the group consisting of loose fibers, stranded fibers, flat ribbons, rollable ribbons, intermittently bonded ribbons, and combinations thereof.

11. The optical fiber cable (100) as claimed in claim 1, wherein the outer sheath (104) surface has a root mean square roughness (Rq) in the range of 0.5 to 4 µm.

12. The optical fiber cable (100) as claimed in claim 1, wherein the outer sheath (104) surface has a maximum height of roughness (Rz) in the range of 6 to 15 µm.
